# EUROPEAN PATENT APPLICATION

(11) **EP 3 239 101 A1**
(43) Date of publication of application: **01.11.2017**
(21) Application number: 15873436.8
(22) Date of filing: 10.08.2015
(51) Int. Cl.: C01B 32/05

(54) **OXIDIZED CARBON NANOPARTICLES, METHOD FOR PRODUCING SAME, ORGANIC/INORGANIC COMPOSITE COMPRISING SAME, AND METHOD FOR PRODUCING ORGANIC/INORGANIC COMPOSITE**

(30) Priority: 22.12.2014 KR 20140185951
(71) Applicant: Soulbrain Co., Ltd., Seongnam-si, Gyeonggi-do 463-400 (KR)
(72) Inventor: LEE, Seung hyun, Seongnam-si Gyeonggi-do 463-826 (KR); KIM, Seok joo, Yongin-si Gyeonggi-do 446-938 (KR)
(74) Representative: Berggren Oy, Helsinki & Oulu
(86) International application number: PCT/KR2015/008341
(87) International publication number: WO 2016/104908

(57) **Abstract**

The present disclosure relates to oxidized carbon nanoparticles, and a method for producing same. The oxidized carbon nanoparticles are nano-sized spherical particles of oxidized carbon have a C/O atomic ratio from X-ray photoelectron spectroscopy (XPS) of 1 to 9, and the largest fraction of oxygen thereof from XPS is observed in a C-O(OH) bind. The oxidized carbon nanoparticles have better physical properties than typical carbon materials such as graphite or carbon black, and the producing process thereof is economical and environmentally-friendly. Further, the oxidized carbon nanoparticles may be applied as a filling material of an organic/inorganic composite, and when applied as such, is environmentally-friendly, economical, exhibits excellent dispersion properties, and may be immediately used without post-processing, such as functionalization.

## Description

### TECHNICAL FIELD

Embodiments of the present disclosure relates to oxidized carbon nanoparticles, a method for producing the same, an organic/inorganic composite including the same, and a method for producing the organic/inorganic composite. More particularly, embodiments of the present disclosure relates to oxidized carbon nanoparticles which may be used as a fillers for an organic/inorganic composite, and when applied as such, are environmentally-friendly and economical, exhibit excellent dispersion properties, and are immediately usable without post-processing, such as functionalization.

### BACKGROUND ART

In the carbon material industry demand for low-carbon green growth-related industries such as energy efficiency industries, environmental protection industries, and advanced water treatment industries have become important issues. At the same time, convergence of material fields is consistently required in response to convergence and needs of such industries.

In this regard, the application technology of carbon materials and the surrounding technologies have rapidly developed. It is expected that the promotion of convergence of carbon materials will boost the material industries, and carbon materials will become a source of high value as a key role of a new paradigm for technology innovation.

Synthetic graphite, graphene, carbon fiber, carbon nanotube, active carbon, and carbon black, which are the six common carbon materials, are widely used in the industry. However, producing graphene and carbon nanotube is not environmentally-friendly nor economical. The difficulty lies in applying convergence to graphene and carbon nanotube.

There is a need to develop new generation materials which have better physical properties than the typical carbon materials such as graphite and carbon black, are more economical and environmentally-friendly in terms of production process and are applicable to be used in composite materials.

Efforts have been made to develop plastic materials having stronger tensile strength with vast applicability.

A composite and a compound are representative examples of a composite material. Recently, nano composite materials have developed to further improve properties of composite materials. For example, research into nano polymer composite materials has been conducted based on graphene, carbon nanotube, and the like. However, graphene and carbon nanotube, which are may be used as fillers, are expensive and do not have good dispersion properties. There is a need to develop fillers that are applicable to nano polymer composite materials, which are environmentally-friendly and economical to produce, exhibit excellent dispersion properties, and are immediately usable without post-processing such as functionalization.

### DISCLOSURE

### Technical Problem

An object of the present disclosure provides oxidized carbon nanoparticles which have better physical properties than typical carbon materials such as graphite or carbon black, are economical and environmentally-friendly in terms of production process, are applicable as a filler for an organic/inorganic composite, and when applied as such, are environmentally-friendly and economical, exhibit excellent dispersion properties, and are immediately usable without post-processing such as functionalization, and a method for producing the same.

Another object of the present disclosure provides an organic/inorganic composite including the oxidized carbon nanoparticles, and a method for producing the organic/inorganic composite.

### Technical Solution

According to an embodiment of the present disclosure, there is provided oxidized carbon nanoparticles, which have spherical particle of nano-sized oxidized carbon, wherein a C/O atomic ratio is in a range of 1 to 9, and a largest oxygen fraction in a C-O(OH) bond.

A C-C bond, a C-O(OH) bond, a C-O-C bond, a C=O bond, and an O=C-OH bond may be observed in the oxidized carbon nanoparticles.

A fraction of the C-O(OH) bond may be greater than a fraction of a C-O-C bond in the oxidized carbon nanoparticles.

A fraction of the C-O(OH) and a fraction of a C-O-C bond may be in a range of 1:1 to 6:1 in the oxidized carbon nanoparticles.

The oxidized carbon nanoparticles may have a specific surface area of 50 m²/g to 1,500 m²/g.

A defect peak/carbon peak signal intensity ratio (I_{D}/ I_{G} intensity ratio) of the oxidized carbon nanoparticles may be in a range of 0.004 to 1.

The oxidized carbon nanoparticles may have a particle size of 1 nm to 3,000 nm and an aspect ratio of 0.8 to 1.2.

According to another embodiment of the present disclosure, there is provided a method for producing oxidized carbon nanoparticles that includes preparing a raw material solution by dissolving a carbon precursor in a solvent. Adding an ammonium chloride catalyst to the raw material solution, heating the ammonium chloride catalyst and the raw material solution, and performing a reaction therebetween.

The carbon precursor may be glucose, fructose, starch, cellulose, and mixtures thereof

The solvent may be water or ethylene glycol.

The carbon precursor may be dissolved in an amount of 0.1 parts by weight to 50 parts by weight with respect to 100 parts by weight of the solvent.

Performing the reaction may be done in an airtight container and may include heating the raw material solution, to which the catalyst is added, to 100°C to 300°C, so that the solvent has a vapor pressure of 2 bar to 30 bar, and performing a reaction for 1 minute to 60 minutes.

The catalyst may be added after the raw material solution is heated to 20°C to 100°C.

The catalyst may be added in an amount of 0.001 parts by weight to 1 part by weight with respect to 100 parts by weight of the solvent.

According to yet another embodiment of the present disclosure, there is provided an organic/inorganic composite having a polymer matrix including a polymer resin. The oxidized carbon nanoparticles as disclosed above may be dispersed in the polymer matrix.

The polymer resin may be epoxy, polyester (PE), polyurethane (PU), polysulfone (PSF), polyimide (PI), polyamide (PA), polycarbonate (PC), polypropylene (PP), an acrylonitrile-butadiene-styrene copolymer (ABS), polyvinylidene fluoride (PVDF), polytetrafluoroethylene (PTFE), cellulose, and mixtures thereof.

The organic/inorganic composite may include the oxidized carbon nanoparticles in an amount of 0.1 parts by weight to 10 parts by weight with respect to 100 parts by weight of the polymer matrix.

According to still another embodiment of the present disclosure, there is provided a method for producing an organic/inorganic composite, the method may include preparing an oxidized carbon nanoparticle dispersion liquid by dissolving the oxidized carbon nanoparticles in a solvent. Preparing a polymer dispersion liquid by adding and dissolving a polymer resin to the oxidized carbon nanoparticle dispersion liquid.

The solvent may be N-Methyl-2-pyrrolidone (NMP), dimethylpyrrolidone (DMP), dimethylformamide (DMF), dimethylacetamide (DMAc), dimethyl sulfoxide (DMSO), and mixtures thereof.

Preparing the oxidized carbon nanoparticles dispersion liquid may include dispersing the oxidized carbon nanoparticles in the solvent by sonicating the oxidized carbon nanoparticles for 0.5 hours to 5 hours.

The oxidized carbon nanoparticles may be dissolved in an amount of 0.01 parts by weight to 10 parts by weight with respect to 100 parts by weight of the solvent, and the polymer resin may be added in an amount of 1 part by weight to 90 parts by weight with respect to 100 parts by weight of the solvent.

### Advantageous Effects

Oxidized carbon nanoparticles according to embodiments of the present disclosure have better physical properties than typical carbon materials such as graphite or carbon black, and a production process thereof is economical and environmentally-friendly. In addition, the oxidized carbon nanoparticles may be used as a filler for an organic/inorganic composite, and when used as such, are environmentally-friendly and economical, exhibit excellent dispersion properties, and are immediately usable without post-processing, such as functionalization.

In addition, an organic/inorganic composite according to the present disclosure has stronger tensile strength.

### DESCRIPTION OF DRAWINGS

FIG. 1 is a graph showing an infrared spectroscopic analysis result of oxidized carbon nanoparticles (OCN) produced by Production Example 1 accordingly to an embodiment of the present disclosure.
FIGS. 2 and 3 are graphs respectively showing X-ray Photoelectron Spectroscopy (XPS) results of the oxidized carbon nanoparticles produced by Production Example 1 accordingly to an embodiment of the present disclosure and a commercially available graphene oxide.
FIG. 4 is a graph showing a Raman analysis result of the oxidized carbon nanoparticles (OCN) produced in Production example 1 accordingly to an embodiment of the present disclosure.
FIG. 5 is a graph showing tensile strength of an organic/inorganic composite film produced in Production Example 3 accordingly to an embodiment of the present disclosure.

### BEST MODE FOR CARRYING OUT THE INVENTION

Hereinafter, embodiments of the present disclosure will be described in detail with reference to the accompanying drawings so as to be easily carried out by those of ordinary skill in the art to which the invention pertains. The present disclosure may, however, be embodied in various different forms and is limited to the embodiments set forth herein.

The term "nano" used herein means a nano scale and includes a scale of 1 µm or less.

Oxidized carbon nanoparticles according to embodiments of the present disclosure are spherical particles of nano-size oxidized carbon.

Therefore, the oxidized carbon nanoparticle is a material different from graphene oxide, and the graphene oxide indicates oxide of graphene that is a material having a two-dimensional planar structure in which carbon atoms are connected in a honeycomb pattern having a hexagonal shape.

The oxidized carbon nanoparticles may have a particle size in a range of 1 nm to 3,000 nm, preferably 10 nm to 600 nm. When the size of the oxidized carbon nanoparticles are within this range, it disperse well, and a tensile strength is improved because a contact area with an organic material is higher due to a large surface area.

The oxidized carbon nanoparticle may be a spherical particle that has an aspect ratio of 0.8 to 1.2, and more specifically, 0.9 to 1.1. When the oxidized carbon nanoparticle is produced by a method according to embodiments of the present disclosure, the oxidized carbon nanoparticle has a spherical shape, and accordingly, may have the aspect ratio described above. In addition, the oxidized carbon nanoparticles differ from the graphene oxide in that the aspect ratio of the graphene oxide is greater than 1.1.

The oxidized carbon nanoparticle has a carbon/oxygen (C/O) atomic ratio based an X-ray Photoelectron Spectroscopy (XPS) in a range of 1 to 9, preferably 2 to 9. When the C/O atomic ratio is within this range, the oxidized carbon nanoparticles disperse readily in an organic solvent such as n-methylpyrrolidone (NMP), and thus, the oxidized carbon nanoparticle is suitable to be used in the production of an organic/inorganic composite or the like.

In addition, a C-C bond, a C-O(OH) bond, a C-O-C bond, a C=O bond, and an O=C-OH bond are observed in the oxidized carbon nanoparticles by the XPS, and the largest oxygen fraction is observed in the C-O(OH) bond among those bonds. On the other hand, in the case of the graphene oxide, a C-C bond, a C-O(OH) bond, a C-O-C bond, a C=O bond, and an O=C-OH bond are equally observed from XPS. The graphene oxide differs from the oxidized carbon nanoparticle in that the largest oxygen fraction is observed in the C-O-C bond among those bonds.

Specifically, a fraction of the C-O(OH) bond and a fraction of the C-O-C bond in the oxidized carbon nanoparticles based on the XPS may be in a range of 1:1 to 6:1, preferably 2:1 to 4:1. When the fraction of the C-O(OH) bond and the fraction of the C-O-C bond are within this range, the oxidized carbon nanoparticles disperse readily in an organic solvent such as n-methylpyrrolidone (NMP). Accordingly, the oxidized carbon nanoparticle is suitable to be used in the production of an organic/inorganic composite and the like.

The oxidized carbon nanoparticle may have a Brunauer-Emmett-Teller (BET) specific surface area in a range of 50 m²/g to 1,500 m²/g, preferably 100 m²/g to 700 m²/g. When the BET specific surface area of the oxidized carbon nanoparticle is within the range and the oxidized carbon nanoparticle is dispersed in an organic solvent so as to produce an organic/inorganic composite, viscosity is increased according to an amount of the oxidized carbon nanoparticle, and thus, the oxidized carbon nanoparticle is suitable to be used in the production of an organic/inorganic composite within the range of the BET specific surface area.

A defect peak/carbon peak signal intensity ratio (I_{D}/I_{G} intensity ratio) of the oxidized carbon nanoparticle from a Raman analysis may be in a range of 0.004 to 1, preferably 0.01 to 0.5. When the defect peak/carbon peak signal intensity ratio is within this range, the oxidized carbon nanoparticles may be dissolved with an organic solvent such as NMP. When an organic/inorganic composite is produced, the oxidized carbon nanoparticles include an appropriate chemical group capable of interacting with an organic material.

A method for producing oxidized carbon nanoparticles according to another embodiment of the present disclosure includes preparing a raw material solution by dissolving a carbon precursor in a solvent. Adding an ammonium chloride catalyst to the raw material solution, heating the ammonium chloride catalyst and the raw material solution, and performing a reaction therebetween.

The carbon precursor may be glucose, fructose, starch, cellulose, and mixtures thereof, and glucose may be preferably used.

The solvent may be water or ethylene glycol.

The carbon precursor may be dissolved in an amount of 0.1 parts by weight to 50 parts by weight, preferably 1 part by weight to 30 parts by weight, with respect to 100 parts by weight of the solvent. When the amount of the carbon precursor is less than 0.1 parts by weight with respect to 100 parts by weight of the solvent, an amount of oxidized carbon nanoparticles synthesized may be small, and thus, it may not be suitable. When the amount of the carbon precursor is more than 50 parts by weight, large particles may be synthesized and the carbon precursor may not easily dissolve.

Specifically, the reaction may take place in an airtight container and may include heating the raw material solution, to which the catalyst is added, to 100°C to 300°C, so that the solvent has a vapor pressure of 1 bar to 30 bar. The reaction may be performed between 1 minute to 60 minutes.

When the heating temperature is less than 100°C, the reaction may not occur. When the heating temperature is more than 300°C, all of chemical functional groups in an oxidized form are reduced due to a high reaction temperature, and thus, reduced carbon nanoparticles may be obtained. When the vapor pressure of the solvent is less than 2 bar, the reaction may not be initiated. When the vapor pressure of the solvent is more than 30 bar, large particles may be synthesized due to a high reaction condition. In addition, when the reaction time is less than 1 minute, the reaction may not finish, and thus, particle formation, yield, and the like may be reduced. When the reaction time is more than 60 minutes, an excess reaction may occur to cause synthesis of large particles and a reduction of chemical functional groups in an oxidized form, and thus, a C/O fraction may be changed due to reduced carbon nanoparticles.

After the raw material solution is heated to 20°C to 100°C, preferably 40°C to 80°C, the ammonium chloride catalyst may be added to the raw material solution. When the ammonium chloride catalyst is added after the raw material solution is heated to the temperature range, particles having a uniform size may be synthesized.

The catalyst may be added in an amount of 0.001 parts by weight to 1 part by weight, preferably 0.05 parts by weight to 0.5 parts by weight, with respect to 100 parts by weight of the solvent. When the amount of the catalyst is less than 0.001 parts by weight with respect to 100 parts by weight of the solvent,the reaction rate is not promoted. When the amount of the catalyst is more than 1 part by weight, large particles may be synthesized and may act as impurities.

An organic/inorganic composite according to yet another embodiment of the present disclosure includes a polymer matrix including a polymer resin, and the oxidized carbon nanoparticles according to embodiments of the present disclosure dispersed in the polymer matrix.

The oxidized carbon nanoparticles dispersed in the polymer matrix has a size greater than that of a polymer chain of the polymer resin, and is entwined with the polymer chain to function as a primary strength filler, and perform a secondary strength role through a hydrogen bond between a hydroxy group and a carboxy group present on the surface of the oxidized carbon nanoparticle. Therefore, while a general dry polyurethane resin has a tensile strength of 65 MPa, a density of the organic/inorganic composite is improved and tensile strength thereof is improved by 10% to 30%.

The polymer resin may be epoxy, polyester (PE), polyurethane (PU), polysulfone (PSF), polyimide (PI), polyamide (PA), polycarbonate (PC), polypropylene (PP), an acrylonitrile-butadiene-styrene copolymer (ABS), polyvinylidene fluoride (PVDF), polytetrafluoroethylene (PTFE), cellulose, and mixtures thereof.

The organic/inorganic composite may include the oxidized carbon nanoparticles in an amount of 0.1 parts by weight to 10 parts by weight, preferably 0.2 parts by weight to 3 parts by weight, with respect to 100 parts by weight of the polymer matrix. When the amount of the oxidized carbon nanoparticles are less than 0.1 parts by weight with respect to 100 parts by weight of the polymer matrix, tensile strength may not improve. When the amount of the oxidized carbon nanoparticles are more than 10 parts by weight, an amount of solids excessively increases, and thus, there may be dispersion and viscosity problems with the oxidized carbon nanoparticles and may agglomerate like mud.

A method for producing an organic/inorganic composite according to still another embodiment of the present disclosure includes preparing an oxidized carbon nanoparticle dispersion liquid by dissolving the oxidized carbon nanoparticles in a solvent, preparing a polymer dispersion liquid by adding, and dissolving a polymer resin to the oxidized carbon nanoparticle dispersion liquid.

The solvent may be N-Methyl-2-pyrrolidone (NMP), dimethylpyrrolidone (DMP), dimethylformamide (DMF), dimethylacetamide (DMAc), dimethyl sulfoxide (DMSO), and mixtures thereof.

Preparing the oxidized carbon nanoparticle dispersion liquid may include dispersing the oxidized carbon nanoparticles in the solvent by sonicating the oxidized carbon nanoparticles at 250 W to 1,500 W for 0.5 hours to 5 hours by using a Sonics 1500W ultrasonic disperser. In a case where the oxidized carbon nanoparticles are dispersed in the solvent through a sonication treatment, it is advantageous in dispersing the oxidized carbon nanoparticles in a primary particle state.

The oxidized carbon nanoparticles may be dissolved in an amount of 0.01 parts by weight to 10 parts by weight, preferably 0.1 parts by weight to 5 parts by weight, with respect to 100 parts by weight of the solvent. When the oxidized carbon nanoparticle is dissolved in an amount of less than 0.01 parts by weight with respect to 100 parts by weight of the solvent, an improvement in tensile strength of the organic/inorganic composite may be slight. When the oxidized carbon nanoparticle is dissolved in an amount more than 10 parts by weight with respect to 100 parts by weight of the solvent, the organic/inorganic composite may not be moist and dispersed and may become like clay, and thus, the viscosity of the organic/inorganic composite may be a problem.

The polymer resin may be dissolved in an amount of 1 part by weight to 90 parts by weight, preferably 10 parts by weight to 70 parts by weight, with respect to 100 parts by weight of the solvent. When the polymer resin is dissolved in an amount of less than 1 part by weight with respect to 100 parts by weight of the solvent, there may be a problem in machinability in a case where the organic/inorganic composite is produced into a film and a molded article. When the polymer resin is dissolved in an amount of more than 90 parts by weight, there may be a problem in workability.

The organic/inorganic composite may be produced in various types such as a film according generally known methods. For example, the organic/inorganic composite may be inserted into a Teflon mold and dried to thereby produce a film type organic/inorganic composite. A film may be formed on a support substrate through spin coating, spray coating, slit die coating, flow coating, roll coating, and doctor blade coating, in addition to the direct molding.

The organic/inorganic composite produced in the film type may be formed to have a thickness of 0.1 µm to 100 µm and may be manufactured alone or layer-by-layer.

In addition, the organic/inorganic composite may be produced in a film type or a three-dimensional structure type through injection molding or extrusion using a calender.

### MODE FOR CARRYING OUT THE INVENTION

Hereinafter, embodiments of the present disclosure will be described in detail with reference to the accompanying drawings so as to be easily carried out by those of ordinary skill in the art to which the invention pertains. The present disclosure may, however, be embodied in various different forms and is limited to the embodiments set forth herein.

### [Production Examples]

### (Production Example 1: Production of Oxidized carbon nanoparticle]

Glucose was dissolved in an amount of 2.5 parts by weight with respect to 100 parts by weight of water. The raw material solution prepared as above was put into an airtight pressure container and heated to 80°C. Then ammonium chloride was added to the raw material solution in an amount of 0.001 parts by weight, the resultant mixture was heated to 160°C at a rate of 2°C per minute, and a reaction was performed thereon for 30 minutes. The water had a vapor pressure of 8 bar according to the heating temperature in the airtight pressure container.

After the completion of the reaction, a reaction solution was put into a centrifuge and was rotated at 5,000 rpm for 30 minutes to precipitate, separate, and clean oxidized carbon nanoparticles. This process was performed three times to vacuum-dry the oxidized carbon nanoparticles at 40°C, thereby obtaining a solid powder.

### [Production Example 2: Production of Organic/Inorganic Composite]

0.5 parts by weight of the oxidized carbon nanoparticles produced in Production Example 1 was sonicated for 60 minutes and dispersed in 100 parts by weight of an NMP solvent. Polyurethane (SONGSTOMER P-3175A) was added in an amount of 50 parts by weight with respect to 100 parts by weight of the solvent and was dissolved to prepare an organic/inorganic composite dispersion liquid in an invisible bright or dark brown colloidal state.

### [Production Example 3: Production of Organic/Inorganic Composite Film]

The organic/inorganic composite dispersion liquid prepared in Production Example 2 was put into a 5x5cm² Teflon mold and dried at 60°C for 1 hour to produce an organic/inorganic composite film.

### [Example 1: Property Analysis of Oxidized Carbon Nanoparticle]

### (Example 1-1: Infrared Spectroscopic Analysis of Oxidized Carbon Nanoparticle]

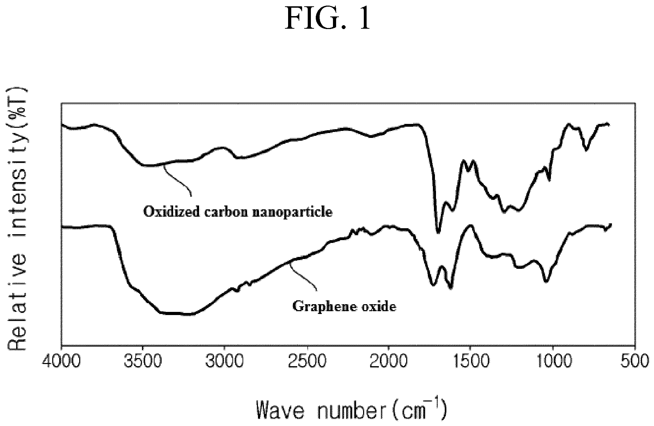

The oxidized carbon nanoparticle (OCN) produced in Production Example 1 and commercially available graphene oxide (GO bucky paper product manufactured by Grapheneol) were analyzed by using an infrared spectrometer (Vertex 70 product manufactured by Bruker), and results thereof are shown in FIG. 1.

FIG. 1 shows spectra measured through infrared spectroscopic analysis of a spectrum of the oxidized carbon nanoparticle and a spectrum of the graphene oxide at a wave number of 500 to 4,000. As representative chemical functional groups, a carboxyl group around a wave number of 1,700 and a hydroxy group appearing as a wide band at a wave number of 3,200 to 3,600 were observed through infrared spectroscopic analysis.

Referring to FIG. 1, it can be seen that the oxidized carbon nanoparticle is a spherical particle material having a diameter of 1 nm to 500 µm, a carbon/oxygen ratio thereof is 10 atom% or more, and a carboxyl group (-COOH), a hydroxyl group (-OH), an epoxy group (-O-), and the like are contained on a spherical surface thereof.

### (Example 1-2: X-ray Photoelectron Spectroscopy Analysis of Oxidized Carbon Nanoparticle)

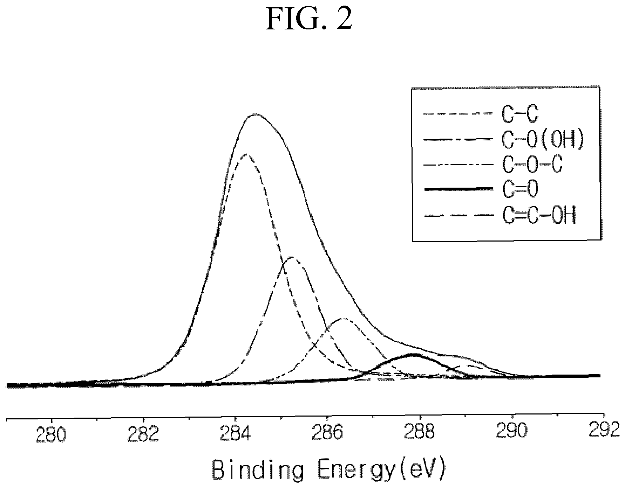

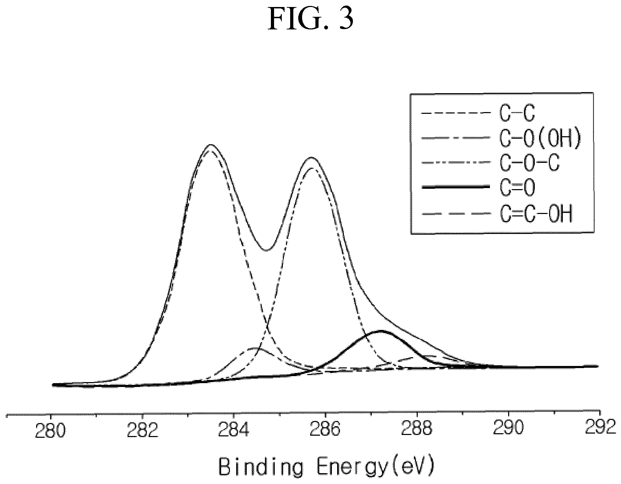

An X-ray Photoelectron Spectroscopy (XPS) analysis was performed on the oxidized carbon nanoparticle (OCN) produced in Production Example 1 and a commercially available graphene oxide (GO bucky paper product manufactured by Grapheneol), and results thereof are shown in FIGS. 2 and 3.

Referring to FIGS. 2 and 3, it can be seen that the oxidized carbon nanoparticle and the graphene oxide have a C-C bond, a C-O(OH) bond, a C-O-C bond, a C=O bond, and an O=C-OH bond, and it can be seen that, in the case of the oxidized carbon nanoparticle, a fraction of the C-O(OH) bond is greater than a fraction of the C-O-C bond, but in the case of the graphene oxide, a fraction of the C-O-C bond is greater than a fraction of the C-O(OH) bond.

### (Example 1-3: Scanning Electron Microscope Observation of Oxidized Carbon Nanoparticle)

The oxidized carbon nanoparticle (OCN) produced in Production Example 1 was observed by using a scanning electron microscope (SEM).

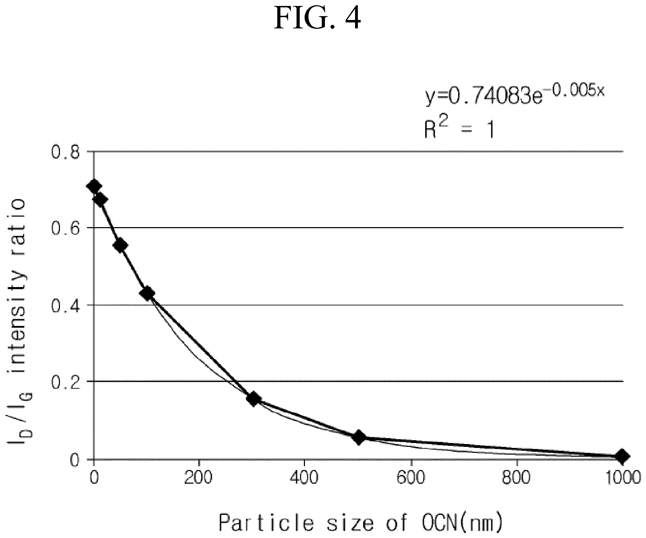

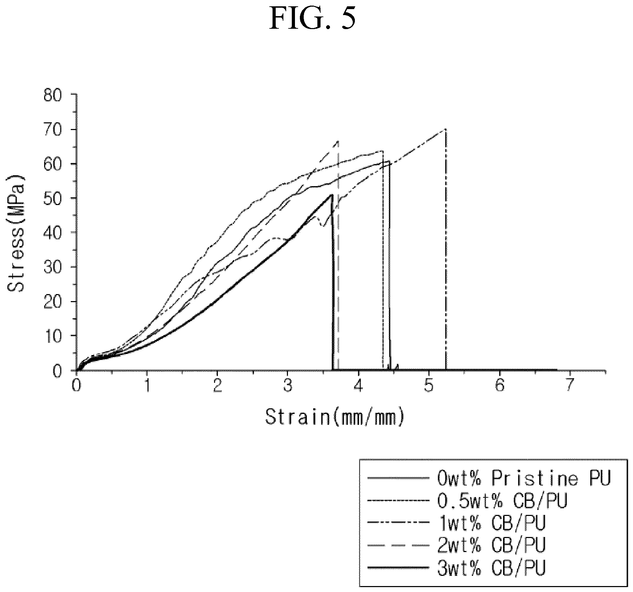

Results thereof are shown in FIGS. 4 and 5 of Korean Patent Application No. 2014-0185951 (filed December 22, 2014), which is the priority application of the present invention.

FIGS. 4 and 5 of Korean Patent Application No. 2014-0185951 are photos obtained by observing the oxidized carbon nanoparticle (OCN) produced in Production Example 1 by using a scanning electron microscope (SEM). Referring to FIGS. 4 and 5, it can be seen that the oxidized carbon nanoparticle is a nano-scale spherical particle that has a particle size of 1 nm to 3,000 nm and an aspect ratio of 0.9 to 1.1.

### (Example 1-4: Raman analysis of Oxidized Carbon Nanoparticle)

A Raman analysis was performed on the oxidized carbon nanoparticle (OCN) produced in Production Example 1, and a result thereof is shown in FIG. 4.

Referring to FIG. 4, it can be seen that a defect peak/carbon peak signal intensity ratio (I_{D}/I_{G} intensity ratio) of the oxidized carbon nanoparticle obtained through the Raman analysis is in a range of 0.004 to 0.7.

### [Example 2: Property Analysis of Organic/Inorganic Composite]

The organic/inorganic composite film produced in Production Example 3 was a film having a thickness of 3 µm to 5 µm. In order to measure tensile strength of the organic/inorganic composite, a specimen was prepared by using dog-bone, a specimen preparation device. A tensile strength of the specimen was measured by using a universal testing machine (UTM).

In FIG. 5, the bold solid line indicates tensile strength of a pure polyurethane film, and the light solid line, the dotted line line, the double dotted line, and the broken line respectively indicate tensile strengths of an organic/inorganic composite film included in an amount of 0.5 wt%, an organic/inorganic composite film included in an amount of 1 wt%, an organic/inorganic composite film included in an amount of 2 wt%, and an organic/inorganic composite film included in an amount of 3 wt% with respect to total weight of an organic/inorganic composite.

Referring to FIG. 5, it can be seen that the pure polyurethane film exhibits a measurement value of 61 MPa at a strain of 4.5 mm/mm and the organic/inorganic composite film exhibits a measurement value of 72 MPa at a strain of 5.3 mm/mm, and thus, tensile strength of the organic/inorganic composite film is increased by about 17%.

While preferred embodiments of the present disclosure have been described in detail, the scope of the present disclosure is not limited thereto, and various modifications and improvements made using the basic concept of the present disclosure by those of ordinary skill in the art also fall within the scope of the present disclosure.

### INDUSTRIAL AVAILABILITY

The present disclosure relates to oxidized carbon nanoparticles, a method for producing the same, an organic/inorganic composite including the same, and a method for producing the organic/inorganic composite. The oxidized carbon nanoparticles have better physical properties than typical carbon materials such as graphite or carbon black, and a production process thereof is economical and environmentally-friendly. In addition, the oxidized carbon nanoparticles may be applied as a filling material of an organic/inorganic composite, and when applied as such, are environmentally-friendly and economical, exhibit excellent dispersion properties, and are immediately usable without post-processing such as functionalization.

## Claims

1. An oxidized carbon nanoparticle, which is a spherical particle of nano-sized oxidized carbon,
wherein a C/O atomic ratio from X-ray Photoelectron Spectroscopy (XPS) is in a range of 1 to 9, and
a largest oxygen fraction from XPS is observed in a C-O(OH) bond.

2. The oxidized carbon nanoparticle of claim 1, wherein a C-C bond, a C-O(OH) bond, a C-O-C bond, a C=O bond, and an O=C-OH bond are observed in the oxidized carbon nanoparticle from XPS.

3. The oxidized carbon nanoparticle of claim 1, wherein a fraction of the C-O(OH) bond from XPS is greater than a fraction of a C-O-C bond in the oxidized carbon nanoparticle.

4. The oxidized carbon nanoparticle of claim 1, wherein a fraction of the C-O(OH) and a fraction of a C-O-C bond from XPS is in a range of 1:1 to 6:1 in the oxidized carbon nanoparticle.

5. The oxidized carbon nanoparticle of claim 1, wherein the oxidized carbon nanoparticle has a BET specific surface area of 50 m²/g to 1,500 m²/g.

6. The oxidized carbon nanoparticle of claim 1, wherein a defect peak/carbon peak signal intensity ratio (I_{D}/ I_{G} intensity ratio) of the oxidized carbon nanoparticle from Raman analysis is in a range of 0.004 to 1.

7. The oxidized carbon nanoparticle of claim 1, wherein the oxidized carbon nanoparticle has a particle size of 1 nm to 3,000 nm and an aspect ratio of 0.8 to 1.2.

8. A method for producing oxidized carbon nanoparticle, the method comprising:
a step of preparing a raw material solution by dissolving a carbon precursor in a solvent; and
a step of adding an ammonium chloride catalyst to the raw material solution, heating the ammonium chloride catalyst and the raw material solution, and performing a reaction therebetween.

9. The method of claim 8, wherein the carbon precursor is any one selected from the group consisting of glucose, fructose, starch, cellulose, and mixtures thereof

10. The method of claim 8, wherein the solvent is water or ethylene glycol.

11. The method of claim 8, wherein the carbon precursor is dissolved in an amount of 0.1 parts by weight to 50 parts by weight with respect to 100 parts by weight of the solvent.

12. The method of claim 8, wherein the step of performing of the reaction is done in an airtight container and comprises heating the raw material solution, to which the catalyst is added, to 100°C to 300°C, so that the solvent has a vapor pressure of 2 bar to 30 bar, and performing a reaction for 1 minute to 60 minutes.

13. The method of claim 8, wherein the catalyst is added after the raw material solution is heated to 20°C to 100°C.

14. The method of claim 8, wherein the catalyst is added in an amount of 0.001 parts by weight to 1 part by weight with respect to 100 parts by weight of the solvent.

15. An organic/inorganic composite comprising:
a polymer matrix comprising a polymer resin; and
the oxidized carbon nanoparticle of claim 1, which is dispersed in the polymer matrix.

16. The organic/inorganic composite of claim 15, wherein the polymer resin is any one selected from the group consisting of epoxy, polyester (PE), polyurethane (PU), polysulfone (PSF), polyimide (PI), polyamide (PA), polycarbonate (PC), polypropylene (PP), an acrylonitrile-butadiene-styrene copolymer (ABS), polyvinylidene fluoride (PVDF), polytetrafluoroethylene (PTFE), cellulose, and mixtures thereof.

17. The organic/inorganic composite of claim 15, wherein the organic/inorganic composite comprises the oxidized carbon nanoparticle in an amount of 0.1 parts by weight to 10 parts by weight with respect to 100 parts by weight of the polymer matrix.

18. A method for producing an organic/inorganic composite, the method comprising:
a step of preparing an oxidized carbon nanoparticle dispersion liquid by dissolving the oxidized carbon nanoparticle of claim 1 in a solvent; and
a step of preparing a polymer dispersion liquid by adding and dissolving a polymer resin to the oxidized carbon nanoparticle dispersion liquid.

19. The method of claim 18, wherein the solvent is any one selected from the group consisting of N-Methyl-2-pyrrolidone (NMP), dimethylpyrrolidone (DMP), dimethylformamide (DMF), dimethylacetamide (DMAc), dimethyl sulfoxide (DMSO), and mixtures thereof.

20. The method of claim 18, wherein the step of preparing the oxidized carbon nanoparticle dispersion liquid comprises dispersing the oxidized carbon nanoparticle in the solvent by sonicating the oxidized carbon nanoparticle for 0.5 hours to 5 hours.

21. The method of claim 18, wherein the oxidized carbon nanoparticle is dissolved in an amount of 0.01 parts by weight to 10 parts by weight with respect to 100 parts by weight of the solvent, and
the polymer resin is added in an amount of 1 part by weight to 90 parts by weight with respect to 100 parts by weight of the solvent.
